# EUROPÄISCHE PATENTSCHRIFT

(11) **EP 1 430 590 B1**
(45) Veröffentlichungstag und Bekanntmachung des Hinweises auf die Patenterteilung: **13.11.2013**
(21) Anmeldenummer: 02774293.1
(22) Anmeldetag: 30.08.2002
(51) Int. Cl.: H02K 55/04, H02K 5/24, B63H 25/42, B63H 23/24

(54) **ELEKTRISCHE MASCHINEN IN SUPRALEITUNGS-TECHNIK FÜR MARINE (NAVY)-SCHIFFE**
SUPERCONDUCTING ELECTRICAL MACHINES FOR USE IN NAVY SHIPS
MACHINES ELECTRIQUES REALISEES EN TECHNIQUE SUPRACONDUCTRICE POUR DES VAISSEAUX DE MARINE MILITAIRE

(30) Priorität: 30.08.2001 DE 10143713; 29.05.2002 DE 10224014
(43) Veröffentlichungstag der Anmeldung: 23.06.2004
(73) Patentinhaber: Siemens Aktiengesellschaft, 80333 München (DE)
(72) Erfinder: RIES, Günter, 91056 Erlangen (DE)
(86) Internationale Anmeldenummer: PCT/DE2002/003239
(87) Internationale Veröffentlichungsnummer: WO 2003/019759

(56) Entgegenhaltungen:
- EP-A- 0 533 359
- EP-A- 1 010 614
- DE-A- 3 519 103
- DE-A- 19 648 417
- FR-A- 2 772 207
- US-A- 3 452 703
- US-A- 4 040 378
- US-A- 4 176 291
- US-A- 5 053 663
- US-A- 5 193 349
- US-A- 6 165 031
- PATENT ABSTRACTS OF JAPAN vol. 1998, no. 14, 31. Dezember 1998 (1998-12-31) -& JP 10 257752 A (RAILWAY TECHNICAL RES INST;SHIP & OCEAN ZAIDAN), 25. September 1998 (1998-09-25)
- PATENT ABSTRACTS OF JAPAN vol. 009, no. 234 (E-344), 20. September 1985 (1985-09-20) & JP 60 087661 A (HITACHI SEISAKUSHO KK), 17. Mai 1985 (1985-05-17)
- PATENT ABSTRACTS OF JAPAN vol. 009, no. 284 (E-357), 12. November 1985 (1985-11-12) & JP 60 125163 A (HITACHI SEISAKUSHO KK), 4. Juli 1985 (1985-07-04)

## Beschreibung

In der Vergangenheit wurde bereits vorgeschlagen, herkömmliche elektrische Maschinen, z.B. Motoren oder Generatoren, in Supraleitungs-Technik auszuführen, um den Wirkungsgrad dieser Maschinen zu verbessern und platzsparende Konzepte verwirklichen zu können. Entsprechende Labormaschinen wurden auch bereits verwirklicht und in den USA und in Deutschland der Öffentlichkeit vorgestellt. Eine Umsetzung in die Schiffs-Betriebs-Praxis erfolgte jedoch bisher nicht, da die technischen Schwierigkeiten, insbesondere bei Marine(Navy)-Schiffen mit ihren besonders hohen Anforderungen an Schockfestigkeit, Festigkeit bei Vibration etc. als noch nicht überwindbar angesehen wurden.

Es ist Aufgabe der Erfindung, elektrische Maschinen in Supraleitungs-Technik, insbesondere in Hochtemperatur-Supraleitungs-Technik, anzugeben, die praxisgerecht ausgestaltet sind und ohne weiteres in Marine(Navy)-Schiffen verwendet werden können, wobei es insbesondere die Aufgabe ist, einen elektrischen Antriebsmotor in supraleitender Technik für Ruderpropeller anzugeben, bei dem die spezifischen Vorteile der Supraleitungs-Technik zu einem besonders leichten Antrieb führen können, der eine strömungsgünstige Heckform ermöglicht und zu einer schlanken Schiffsausbildung führt.

Für Marine(Navy)-Schiffe geeignete elektrische Maschinen sind bereits bekannt. Diese Maschinen sind groß und schwer und bewegungsmäßig nicht in die Schiffe integriert. Das gleiche gilt für die elektrischen Ruderpropeller-Motoren, wie sie die WO 02/30742 A1 und die DE 196 47 948 A1 zeigen. Diese Motoren sind zwar in Bezug auf Vibrationen von ihrem Gehäuse entkoppelt, durch die vorgesehene übliche Luftkühlung bauen sie jedoch groß und schwer.

Es ist eine besondere Aufgabe der Erfindung, die einzelnen Komponenten einer elektrischen Maschine in Supraleitungs-Technik anzugeben, die für ein Marine(Navy)-Schiff geeignet ist und Beschleunigungen des Schiffsteils, in dem sie angeordnet ist, bis über 100 g ertragen kann. So ist auch eine supraleitende Maschine uneingeschränkt für die Marine (Navy) nutzbar.

Die erfindungsgemäße elektrische Maschine, sei es ein Motor, z.B. ein elektrischer Motor für einen elektrischen Ruderpropeller, oder ein Motor für einen herkömmlichen Propeller oder einen Waterjet, der zur Erhöhung der Gefechtsgeschwindigkeit in dem Marine-Schiff angeordnet ist, oder ein Generator zur Erzeugung von Elektroenergie für beliebige elektrische Verbraucher, zeigt stets die spezifischen Vorteile des hohen Wirkungsgrads, der geringen Abmessungen und des geringen Gewichts eines supraleitenden elektrischen Motors oder Generators.

Die der Erfindung zugrunde liegende Aufgabe wird durch eine elektrische Maschine gelöst, die neben den Merkmalen des Oberbegriffs auch die des kennzeichnenden Teils des Hauptanspruchs aufweist.

Für die wesentlichen Elemente des supraleitenden Motors oder Generators, insbesondere in Hochtemperatur-Supraleitungs-Ausführung, liegen bereits detaillierte Informationen vor, so z.B. über den Kryoverteiler in der Schrift WO 00/13296; desgleichen Informationen über die Kupplung zwischen kaltem Rotorwellenteil und dem nach außen geführten Wellenteil aus der deutschen Patentanmeldung 101 10 674.2 sowie von Kaltköpfen aus der EP 0 865 595 B1. Einzelheiten über Kompressoreinheiten und über Zubehör für Kryo-Refrigeratoren sind z.B. aus den Beschreibungen und Betriebsanleitungen der Firma Leybold für ihre Typen RGS oder Coolpak bekannt. Zusammenfassend lässt sich feststellen, dass aus den verschiedenen Gebieten der Technik, z.B. aus der Kernspintomographie, aus supraleitenden Strombegrenzern oder von ähnlichen Produkten bereits grundsätzlich die Komponenten bekannt sind, die in neuer Kombination und in erfindungswesentlicher Abwandlung für die Motoren und Generatoren für Marine(Navy)-Schiffe eingesetzt werden sollen.

Vorteilhafte Weiterbildungen und Ausgestaltungen der Erfindung ergeben sich aus den Unteransprüchen 2 bis 21.

Gemäß Unteranspruch 2 weisen Rotor, Stator und Kryostat zwischen sich Verbindungselemente und Lager auf, die bei schockbedingter Beschleunigung eine Bewegung der Teile als Einheit ergeben, wobei die Bewegung der Einheit die Vibrationsamplitude übersteigt.

Gemäß Unteranspruch 3 ist das äußere Maschinengehäuse elastisch mit einem Maschinenträger verbunden.

Gemäß Unteranspruch 4 ist das äußere Maschinengehäuse auf einem Grundrahmen elastisch aufgestellt.

Gemäß Unteranspruch 5 ist der Grundrahmen ausweichfähig elastisch, z.B. über elastomere Kissen und/oder Federn, mit dem Schiffskörper verbunden.

Gemäß Unteranspruch 6 weist die Kryoverbindung einen feststehenden Kaltkopf und einen in den Rotorwellenbereich hineinragenden Verteiler für ein flüssiges Kältemittel auf.

Gemäß Unteranspruch 7 ist zwischen dem Verteiler für das flüssige Kältemittel und dem Kryostaten eine flexible Kryoleitung, insbesondere in einer Koaxial-Doppelmantelausführung, angeordnet ist.

Gemäß Unteranspruch 8 weist der Stator eine Kupferwicklung auf und weist der Rotor eine Luftspaltwicklung in Supraleitungsausführung auf.

Gemäß Unteranspruch 9 ist das Kältemittel in den Maschinen flüssiges Neon.

Gemäß Unteranspruch 10 ist das Kältemittel in den Maschinen flüssiger Stickstoff.

Gemäß Unteranspruch 11 werden zwischen feststehenden und rotierenden Teilen der Kryoverbindung Ferro-Fluiddichtungen für das Kältemittel eingesetzt.

Gemäß Unteranspruch 12 weist die Rotorwelle Drehmomentübertragungselemente aus faserverstärktem Kunststoff zwischen dem Kaltteil der Maschine und Normaltemperatur-Wellenteilen auf.

Gemäß Unteranspruch 13 weist die elektrische Maschine Pulsröhrenkühler als Kälteerzeuger auf, die vorzugsweise auf einem elastischen Traggestell angeordnet sind.

Gemäß Unteranspruch 14 ist der Pulsröhrenkühler mit einem Stirling-Linearkompressor kombiniert.

Gemäß Unteranspruch 15 ist die Kryoverbindung vom Pulsröhrenkühler oder ggf. einem anderen Kälteerzeuger zum Kaltkopf an der Maschine in einem Stützrohr geführt oder als metallarmierter Schlauch ausgebildet.

Gemäß Unteranspruch 16 ist die Kaltkopf-Rotor-Kryokupplung in Bezug auf die Rotorwelle durch eine Ferro-Fluidkupplung abgedichtet und der Kaltkopf am Maschinengehäuse fixiert, wobei zwischen diesen beiden Teilen eine elastische Kältemittelverbindung besteht.

Gemäß Unteranspruch 17 ist der Kryoverteiler im Rotorwellenbereich elastisch federnd abgestützt.

Gemäß Unteranspruch 18 bestehen die elastischen Abstützungen in der Maschine aus Standard-Gummifederelementen, z.B. aus dem Bereich der elastischen Wellenkupplungen.

Gemäß Unteranspruch 19 sind die Stator-Kupferwicklungen flüssigkeitsgekühlt, insbesondere wassergekühlt ausgebildet.

Gemäß Unteranspruch 20 weist die elektrische Maschine im Stator radial, axial oder in Umfangsrichtung verlaufende, vorzugsweise wasserdurchströmte, Kühlkanäle auf.

Nähere Einzelheiten der Erfindung sind aus den Zeichnungen zu entnehmen, die, ebenso wie die Unteransprüche, auch weitere erfinderische Einzelheiten enthalten.

Im Einzelnen zeigen in beispielhafter Ausführung:
- FIG 1: einen Prinzipschnitt durch einen elektrischen Ruderpropeller in HTSL-Ausführung,
- FIG 2: einen Prinzipschnitt durch einen elektrischen Ruderpropeller mit vereinfachter Bewegungs-Entkoppelung,
- FIG 3: eine elastische Kühlmittelleitung im Motor,

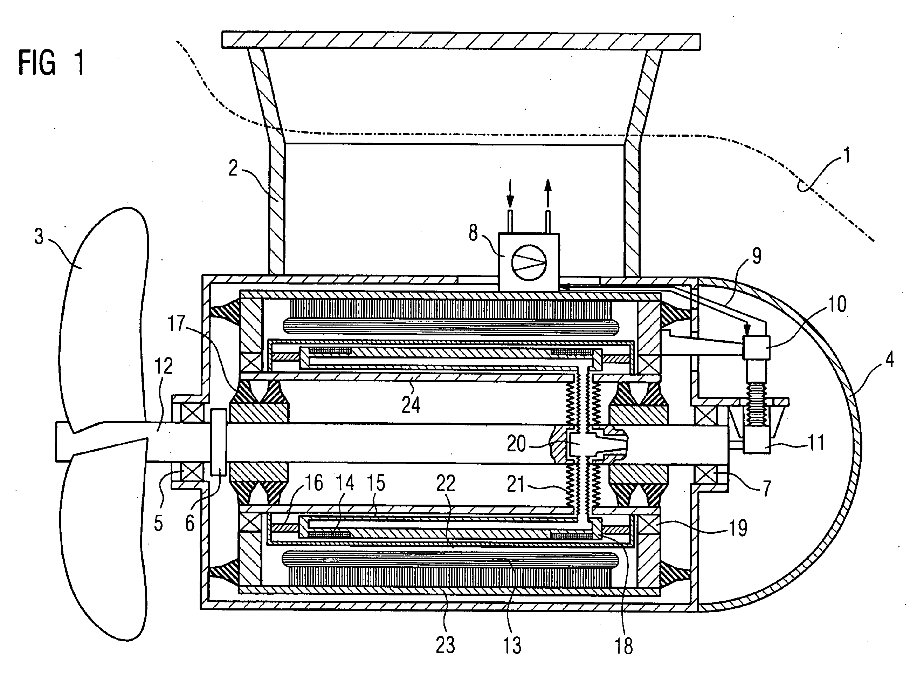

In FIG 1 bezeichnet 1 die Kontur eines Schiffsrumpfs, in dem ein Ruderpropellerschaft 2 drehbar und elastisch ausweichfähig angeordnet ist. Der Propeller des elektrischen Ruderpropellers ist mit 3 bezeichnet, in diesem Fall ein einfacher Zug- oder Druckpropeller. So bleibt vorteilhaft ein Wellenende im Gehäuse für die Kühlmitteleinleitung frei. Das Gehäuse des elektrischen Ruderpropellers ist mit 4 bezeichnet; in ihm ist die Rotorwelle 12, die gleichzeitig die Propellerwelle ist, mit Lagern 5 und 7 mittig angeordnet.

In dem Ruderpropellerschaft 2 ist, etwa auf dem Oberteil des Motorgehäuses 23, der Kompressor eines Kälteaggregats 8 angeordnet, das mit einem nicht näher gezeigten Rückkühlsystem mit dem Kühlsystem des Schiffes oder des elektrischen Ruderpropellers verbunden ist. Zwischen dem Kompressor 8 und einem Kaltkopf 10 ist eine flexible Druckgashin- und -rückleitung 9 angeordnet, die den Kaltkopf 10 mit Druckgas speist. Der Kaltkopf 10 steht mit einer an sich bekannten Kryokupplung 11 in Verbindung, die das im Kaltkopf abgekühlte Kältemittel auf den rotierenden Kryoverteiler 20 weitergibt, von dem es über die flexible Leitung 21 in den Kryostaten 15 gelangt.

Im vakuumisolierten Rotorkryostaten 15 befindet sich die supraleitende Wicklung 14, insbesondere eine Hochtemperatur-Supraleitungs-Wicklung, die über eine Drehmomentübertragungs-Kupplung 16 mit geringer Wärmeleitfähigkeit mit dem warmen Rotorkryostat 15 verbunden ist. Das Rotorrohr 24 ist über Dämpfungselemente 17 mit der Welle 12 des elektrischen Ruderpropellers verbunden und stützt sich über Lager 19 auf dem Endflansch des Gehäuses 23 ab. Außen im Gehäuse 23 befindet sich der Stator 13, zwischen dem und dem Rotor 18 ein relativ großer Luftspalt 22 ausgebildet ist. Der Luftspalt ist so bemessen, dass elastische Verformungen des Rotors 18 und/oder des Stators 13 sowie das Lagerspiel des Lagers 19 in Summe kleiner bleiben als ihre Bewegung unter Schockbeeinflussung. So ist auch eine einwandfreie Funktion bei einer Unterwasserexplosion, z.B. direkt unter dem elektrischen Ruderpropeller, gewährleistet.

Das Rotorrohr 24 ist über Dämpfer 17, hier werden vorteilhaft die gleichen Dämpfer wie zwischen dem Rotorrohr und dem Gehäuse verwendet, mit der Rotorwelle 12 verbunden. Insgesamt ergibt sich eine Lösung mit geringsten Kälteverlusten und gleichzeitig hoher Schockfestigkeit.

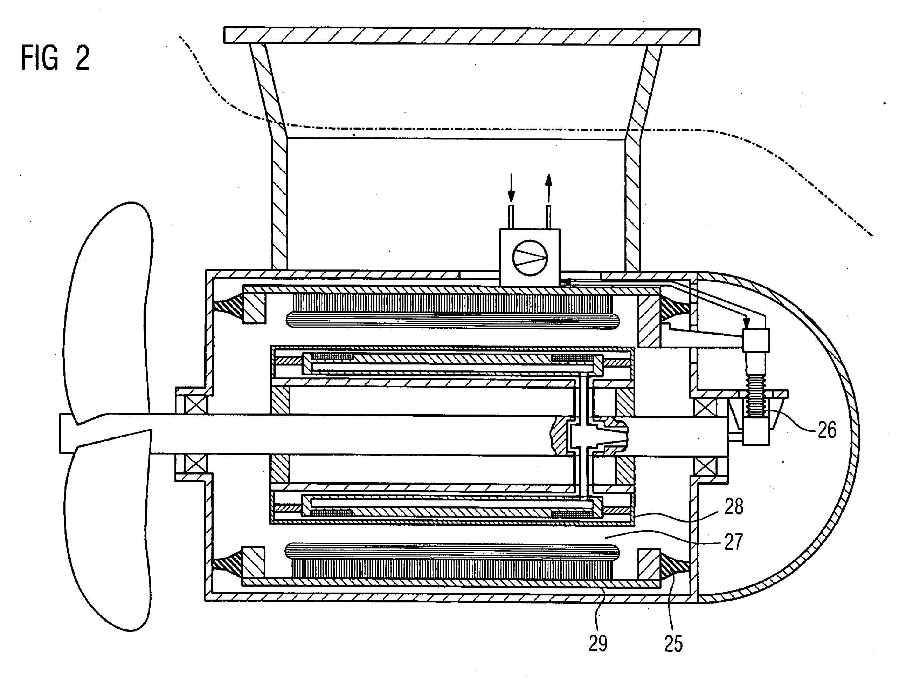

In FIG 2, in der eine vereinfachte Ausführung gezeigt wird, wobei einzelne Teile der Maschine denen aus FIG 1 entsprechen und daher nicht extra bezeichnet sind, wird die hohe mögliche Ampere-Windungszahl supraleitender Wicklungen ausgenutzt. Der Rotor benötigt nur eine geringe Leitermasse und kann mit wenig oder keinem Eisen ausgeführt werden. Stoßkräfte auf die geringe Masse des Rotors sind dann klein oder vergleichbar mit betriebsmäßigen Kräften. Der Rotor ist ungedämpft mit der Welle verbunden; die Verbindung der Kryokupplung zum Kühlmittelraum erfolgt über starre vakuumisolierte Leistung. Der schwere Ständer und der Kryokühler sind über Dämpfer 25 aufgehängt, nur eine flexible Verbindung 26 Kaltkopf - Kryokupplung ist nötig. Der Luftspalt 27 zwischen dem Rotor und der Luftspaltständerwicklung ist dabei so groß gewählt bis 50 mm, dass auch bei maximaler Stoßbelastung keine Berührung von Rotor und Stator 28, 29 auftritt. So ergibt sich eine besonders leichte und einfache Ausführung der supraleitenden Maschine.

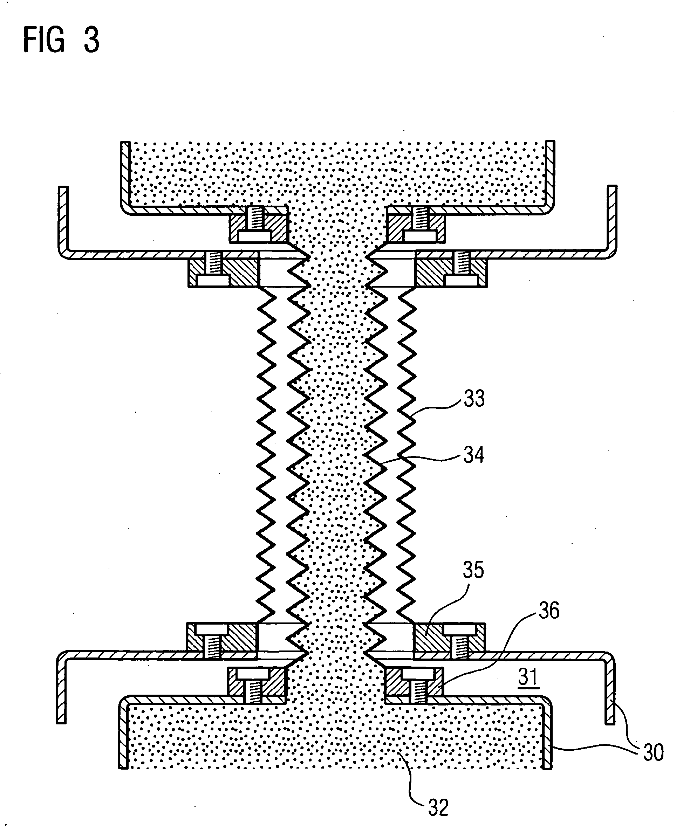

In FIG 3 ist eine flexible Kühlmittelleitung, wie sie z.B. für die Maschine benötigt wird, gezeigt. In einem doppelwandigen Gehäuse 30 befindet sich ein Vakuum 31, das sich zwischen den beiden flexiblen Kühlmittelleitungsteilen 33 und 34 fortsetzt. Diese flexiblen Kühlmittelteile sind über Flansche 35, 36 mit den Wandungen, die das Kühlmittel 32 umschließen, verbunden. Insgesamt ergibt sich eine einfache und nur geringe Wärmeverluste zulassende Ausführung einer Kühlmittelleitung.

## Patentansprüche

1. Elektrische Maschinen, z.B. Motoren oder Generatoren, in Supraleitungs-Technik, insbesondere in Hochtemperatursupraleitungs-Technik, wobei die Maschinen einen Rotor mit Supraleitern, insbesondere Hochtemperatursupraleitern, einen Rotorkryostaten, eine Rotorwelle und eine Kryoverbindung mit einem Kryoleiter zwischen dem Kryostaten und einem Kälteerzeuger sowie einen Stator in nicht supraleitender Technik aufweisen, **dadurch gekennzeichnet, dass** sie für Marine Schiffe tauglich schockfest ausgebildet sind, wobei der Stator (13, 29), der Rotor (18, 28) und der Kryostat (15) gegenüber einem äußeren Maschinengehäuse (4, 23) und gegenüber der Rotorwelle (12) durch elastische Elemente (17, 25) bewegungsmäßig entkoppelt sind.

2. Elektrische Maschinen nach Anspruch 1,
**dadurch gekennzeichnet, dass** Rotor (18), Stator (13) und Kryostat (15) zwischen sich Verbindungselemente (17) und Lager (7) aufweisen, die bei schockbedingter Beschleunigung eine Bewegung der Teile als Einheit ergeben, wobei die Bewegung der Einheit die Vibrationsamplitude übersteigt.

3. Elektrische Maschinen nach Anspruch 1 oder 2,
**dadurch gekennzeichnet, dass** das äußere Maschinengehäuse (4, 23) elastisch mit einem Maschinenträger verbunden ist.

4. Elektrische Maschinen nach Anspruch 1, 2 oder 3,
**dadurch gekennzeichnet, dass** das äußere Maschinengehäuse auf einem Grundrahmen elastisch aufgestellt ist.

5. Elektrische Maschinen nach Anspruch 4,
**dadurch gekennzeichnet, dass** der Grundrahmen ausweichfähig elastisch, z.B. über elastomere Kissen und/oder Federn, mit dem Schiffskörper verbunden ist.

6. Elektrische Maschinen nach einem oder mehreren der vorhergehenden Ansprüche, **dadurch gekennzeichnet, dass** die Kryoverbindung einen feststehenden Kaltkopf und einen in den Rotorwellenbereich hineinragenden Verteiler für ein flüssiges Kältemittel aufweist.

7. Elektrische Maschinen nach Anspruch 6,
**dadurch gekennzeichnet, dass** zwischen dem Verteiler für das flüssige Kältemittel und dem Kryostaten eine flexible Kryoleitung, insbesondere in einer Koaxial-Doppelmantelausführung angeordnet ist.

8. Elektrische Maschinen nach einem oder mehreren der vorhergehenden Ansprüche, **dadurch gekennzeichnet, dass** der Stator eine Kupferwicklung aufweist und dass der Rotor eine Luftspaltwicklung in Supraleitungsausführung aufweist.

9. Elektrische Maschinen nach einem oder mehreren der vorhergehenden Ansprüche, **dadurch gekennzeichnet, dass** das Kältemittel in den Maschinen flüssiges Neon ist.

10. Elektrische Maschinen nach einem oder mehreren der vorhergehenden Ansprüche, **dadurch gekennzeichnet, dass** das Kältemittel in den Maschinen flüssiger Stickstoff ist.

11. Elektrische Maschinen nach einem oder mehreren der vorhergehenden Ansprüche, **dadurch gekennzeichnet, dass** zwischen feststehenden und rotierenden Teilen der Kryoverbindung Ferro-Fluiddichtungen für das Kältemittel eingesetzt werden.

12. Elektrische Maschinen nach einem oder mehreren der vorhergehenden Ansprüche, **dadurch gekennzeichnet, dass** die Rotorwelle Drehmomentübertragungselemente aus faserverstärktem Kunststoff zwischen dem Kaltteil der Maschine und Normaltemperatur-Wellenteilen aufweist.

13. Elektrische Maschinen nach einem oder mehreren der vorhergehenden Ansprüche, **dadurch gekennzeichnet, dass** sie Pulsröhrenkühler als Kälteerzeuger aufweisen, die vorzugsweise auf einem elastischen Traggestell angeordnet sind.

14. Elektrische Maschinen nach Anspruch 13,
**dadurch gekennzeichnet, dass** der Pulsröhrenkühler mit einem Stirling-Linearkompressor kombiniert ist.

15. Elektrische Maschinen nach einem oder mehreren der vorhergehenden Ansprüche, **dadurch gekennzeichnet, dass** die Kryoverbindung vom Pulsröhrenkühler oder ggf. einem anderen Kälteerzeuger zum Kaltkopf an der Maschine in einem Stützrohr geführt oder als metallarmierter Schlauch ausgebildet ist.

16. Elektrische Maschinen nach einem oder mehreren der vorhergehenden Ansprüche, **dadurch gekennzeichnet, dass** die Kaltkopf-Rotor-Kryokupplung in Bezug auf die Rotorwelle durch eine Ferro-Fluidkupplung abgedichtet und dass der Kaltkopf (10) am Maschinengehäuse fixiert ist, wobei zwischen diesen beiden Teilen eine elastische Kältemittelverbindung besteht.

17. Elektrische Maschinen nach einem oder mehreren der vorhergehenden Ansprüche, **dadurch gekennzeichnet, dass** der Kryoverteiler im Rotorwellenbereich elastisch federnd abgestützt ist.

18. Elektrische Maschinen nach einem oder mehreren der vorhergehenden Ansprüche, **dadurch gekennzeichnet, dass** die elastischen Abstützungen in der Maschine aus Standard-Gummifederelementen, z.B. aus dem Bereich der elastischen Wellenkupplungen bestehen.

19. Elektrische Maschinen nach einem oder mehreren der vorhergehenden Ansprüche, **dadurch gekennzeichnet, dass** die Stator-Kupferwicklungen flüssigkeitsgekühlt, insbesondere wassergekühlt ausgebildet sind.

20. Elektrische Maschinen nach Anspruch 20,
**dadurch gekennzeichnet, dass** sie im Stator radial, axial oder in Umfangsrichtung verlaufende, vorzugsweise wasserdurchströmte, Kühlkanäle aufweisen.

## Claims

1. Electrical machines, for example motors or generators, based on superconducting technology, in particular based on high-temperature superconducting technology, with the machines having a rotor with superconductors, in particular high-temperature superconductors, a rotor cryostat, a rotor shaft and a cryogenic connection to a cryogenic conductor between the cryostat and a cold generator, and having a stator which is not based on superconducting technology, **characterized in that** these electrical machines are designed to be capable of being immersed and to be shock-resistant for marine vessels, with the stator (13, 29), the rotor (18, 28) and the cryostat (15) being decoupled in terms of movement from an outer machine housing (4, 23) and from the rotor shaft (12) by means of elastic elements (17, 25).

2. Electrical machines according to Claim 1, **characterized in that** the rotor (18), stator (13) and cryostat (15) have connecting elements (17) and bearings (7) between them, which connecting elements (17) and bearings (7) result in movement of the paths as a unit in the event of acceleration caused by shock, and with the movement of the unit being greater than the vibration amplitude.

3. Electrical machines according to Claim 1 or 2, **characterized in that** the outer machine housing (4, 23) is elastically connected to a machine mount.

4. Electrical machines according to Claim 1, 2 or 3, **characterized in that** the outer machine housing is elastically mounted on a base frame.

5. Electrical machines according to Claim 4, **characterized in that** the base frame is connected to the vessel's hull elastically and flexibly, for example via elastomeric cushions and/or springs.

6. Electrical machines according to one or more of the preceding claims, **characterized in that** the cryogenic connection has a fixed cold head and a distributor, which projects into the rotor shaft area, for a liquid coolant.

7. Electrical machines according to Claim 6, **characterized in that** a flexible cryogenic line, in particular in the form of a coaxial double casing, is arranged between the distributor for the liquid coolant and the cryostat.

8. Electrical machines according to one or more of the preceding claims, **characterized in that** the stator has a copper winding, and **in that** the rotor has a superconducting air gap winding.

9. Electrical machines according to one or more of the preceding claims, **characterized in that** the coolant in the machines is liquid neon.

10. Electrical machines according to one or more of the preceding claims, **characterized in that** the coolant in the machines is liquid nitrogen.

11. Electrical machines according to one or more of the preceding claims, **characterized in that** ferro-fluid seals are used for the coolant between the stationary and rotating parts of the cryogenic connection.

12. Electrical machines according to one or more of the preceding claims, **characterized in that** the rotor shaft has torque transmission elements composed of fiber-reinforced plastic between the cold part of the machine and the normal temperature shaft parts.

13. Electrical machines according to one or more of the preceding claims, **characterized in that** these electrical machines have pulse tube coolers as cold generators, which are preferably arranged on an elastic mounting frame.

14. Electrical machines according to Claim 13, **characterized in that** the pulse tube cooler is combined with a Stirling linear compressor.

15. Electrical machines according to one or more of the preceding claims, **characterized in that** the cryogenic connection from the pulse tube cooler, or possibly from some other cold generator, to the cold head on the machine is routed in a supporting tube, or is in the form of a metal-reinforced flexible tube.

16. Electrical machines according to one or more of the preceding claims, **characterized in that** the cold head/rotor cryogenic coupling is sealed with respect to the rotor shaft by means of a ferro-fluid coupling, and **in that** the cold head (10) is fixed up to the machine housing, with an elastic coolant connection between these two paths.

17. Electrical machines according to one or more of the preceding claims, **characterized in that** the cryogenic distributor is supported in an elastically sprung manner in the rotor shaft area.

18. Electrical machines according to one or more of the preceding claims, **characterized in that** the elastic supports in the machine comprise standard rubber spring elements, for example from the field of elastic shaft couplings.

19. Electrical machines according to one or more of the preceding claims, **characterized in that** the stator copper windings are liquid-cooled, in particular water-cooled.

20. Electrical machines according to Claim 19, **characterized in that** these electrical machines have cooling channels in the stator which run radially, axially or in the circumferential direction and through which water preferably flows.

## Revendications

1. Machines électriques, par exemple moteurs ou génératrices, en technique de supraconduction, notamment en technique de supraconduction à température haute, dans lesquelles les machines ont un rotor ayant des supraconducteurs, notamment des supraconducteurs à température haute, un cryostat rotorique, un arbre rotorique et une liaison cryostatique avec un cryoconducteur, entre le cryostat et un producteur de froid, ainsi qu'un stator en technique non supraconductrice, **caractérisées en ce qu'**elles sont conçues résistantes au choc, convenant pour des bâtiments de navigation marins, le stator ( 13, 29 ), le rotor ( 18, 28 ) et le cryostat ( 15 ) étant découplés avec possibilité de mouvement d'un carter ( 4, 23 ) extérieur de machine et de l'arbre ( 12 ) rotorique par des éléments ( 17, 25 ) élastiques.

2. Machines électriques suivant la revendication 1, **caractérisées en ce que** rotor ( 18 ), stator ( 13 ) et cryostat ( 15 ) ont entre eux des éléments ( 17 ) de liaison et des paliers ( 7 ), qui, lors d'une accélération due à un choc, donnent un déplacement des pièces sous la forme d'une unité, le déplacement de la pièce dépassant les amplitudes de vibration.

3. Machines électriques suivant la revendication 1 ou 2, **caractérisées en ce que** le carter ( 4, 23 ) extérieur de machine est relié élastiquement à un support de machine.

4. Machines électriques suivant la revendication 1, 2, ou 3,
caractérisées en ce le carter extérieur de machine est posé élastiquement sur un cadre de base.

5. Machines électriques suivant la revendication 4,
**caractérisées en ce que** le cadre de base est relié à la coque du bâtiment de navigation, élastiquement avec possibilité d'évitement, par exemple par des coussins élastomères et/ou des ressorts.

6. Machines électriques suivant l'une ou plusieurs des revendications précédentes,
**caractérisées en ce que** la cryoliaison a une tête froide fixe et un répartiteur d'un fluide frigorigène liquide pénétrant dans la partie de l'arbre rotorique.

7. Machines électriques suivant la revendication 6,
**caractérisées en ce qu'**un cryoconduit souple, réalisé notamment à double gaine coaxiale, est monté entre le répartiteur de l'agent frigorigène liquide et le cryostat.

8. Machines électriques suivant l'une ou plusieurs des revendications précédentes,
**caractérisées en ce que** le stator a un enroulement de cuivre et **en ce que** le rotor a un enroulement à entrefer, en réalisation à supraconduction.

9. Machines électriques suivant l'une ou plusieurs des revendications précédentes,
**caractérisées en ce que** le fluide frigorigène dans les machines est du néon liquide.

10. Machines électriques suivant l'une ou plusieurs des revendications précédentes,
**caractérisées en ce que** le fluide frigorigène dans les machines est de l'azote liquide.

11. Machines électriques suivant l'une ou plusieurs des revendications précédentes,
**caractérisées en ce que** des étanchéités ferro-fluidiques pour le fluide frigorigène sont utilisées entre les parties fixes et tournantes de la cryoliaison.

12. Machines électriques suivant l'une ou plusieurs des revendications précédentes,
**caractérisées en ce que** l'arbre rotorique a des éléments de transmission du couple de rotation en matière plastique renforcée par de la fibre, entre la partie froide de la machine et des parties d'arbre à température normale.

13. Machines électriques suivant l'une ou plusieurs des revendications précédentes,
**caractérisées en ce qu'**elles ont des refroidisseurs à tuyaux pulsés comme producteurs de froid, qui sont mis de préférence sur un châssis porteur élastique.

14. Machines électriques suivant la revendication 13,
**caractérisées en ce que** le refroidisseur à tuyau pulsé est combiné à un compresseur linéaire de Stirling.

15. Machines électriques suivant l'une ou plusieurs des revendications précédentes,
**caractérisées en ce que** la cryoliaison du refroidisseur à tuyau pulsé ou le cas échéant d'un autre producteur de froid est guidée vers la tête froide de la machine dans un tuyau d'appui ou est constitué sous la forme d'un conduit souple à armure métallique.

16. Machines électriques suivant l'une ou plusieurs des revendications précédentes,
**caractérisées en ce que** le cryo-accouplement tête froide-rotor est rendu étanche par rapport à l'arbre rotorique par un accouplement ferro-fluidique et **en ce que** la tête ( 10 ) froide est immobilisée sur le carter de la machine, une liaison élastique à fluide frigorigène étant constituée entre ces deux parties.

17. Machines électriques suivant l'une ou plusieurs des revendications précédentes,
**caractérisées en ce que** le cryorépartiteur est suspendu élastiquement dans la partie de l'arbre rotorique.

18. Machines électriques suivant l'une ou plusieurs des revendications précédentes,
**caractérisées en ce que** les appuis élastiques dans la machine sont en des éléments de ressort en caoutchouc standard, par exemple du domaine des accouplements d'arbres élastiques.

19. Machines électriques suivant l'une ou plusieurs des revendications précédentes,
**caractérisées en ce que** les enroulements statoriques en cuivre sont constitués de manière à être refroidis pas du liquide, notamment par de l'eau.

20. Machines électriques suivant la revendication 19,
**caractérisées en ce qu'**elles ont des canaux de refroidissement s'étendant radialement, axialement, ou dans la direction périphérique dans le stator, dans lesquelles de préférence passe de l'eau.
